# EUROPEAN PATENT SPECIFICATION

(11) **EP 0 403 120 B1**
(45) Date of publication and mention of the grant of the patent: **08.01.1997**
(21) Application number: 90305968.1
(22) Date of filing: 31.05.1990
(51) Int. Cl.: G06F 3/033, G06F 3/023

(54) **Colour display colour control**
Farbensteuerung für Farbanzeige
Commande de la couleur pour un écran couleur

(30) Priority: 16.06.1989 US 367526
(43) Date of publication of application: 19.12.1990
(73) Proprietor: International Business Machines Corporation, Armonk, N.Y. 10504 (US)
(72) Inventor: Yanker, Peter Cornelius, Portola Valley, CA 94025 (US)
(74) Representative: Burt, Roger James, Dr.

(56) References cited:
- EP-A- 0 160 548
- EP-A- 0 270 259
- EP-A- 0 313 796
- DATAMATION vol. 25, no. 5, 1 May 1979, ILLINOIS, US pages 150 - 156; R.G. SHOUP: 'Superpaint...the digital animator'

## Description

This invention relates to a colour display colour control in computer-based systems for producing colour images and to a colour palette display interface for use with such systems.

As personal computers (PCs) have improved in processing capability, various application programs have been developed which enable the creation and display of audio- visual presentations. In the mid 1980's, the IBM Corporation marketed a PC application program entitled "PC Storyboard" which enabled the preparation and display of colour presentations on an IBM PC. The PC Storyboard software was comprised of four program segments. A first segment, entitled Picture Maker enabled the creation and modification of pictures in medium resolution graphics. Picture Maker included commands to write text, draw figures, generate charts and to cut and paste images between pictures. The second segment, Picture Taker, was employed to capture picture images of screens from other PC application programs. Story Editor was a third segment which enabled the PC user to organise pictures into presentations (stories). It provided for the selection of a variety of picture-to-picture transition methods that allowed one picture to dissolve into another. Variables such as display times, colours and whether the picture would be developed as a full picture or as a series of partial pictures was also enabled by this software. Storyboard also included a segment entitled "Story Tell" which enabled the presentation of stories assembled by the other segments.

PC Storyboard had a limited colour choice availability, i.e., a background colour and a three-colour palette. The background colour could be selected from one of sixteen choices. Two choices of colour palettes were available, one offering green, red and yellow and the other offering cyan, magenta and white. Each palette was able to be shown in either of two intensities i.e., an intensified "mode" or a "non-intensified mode". In order to provide colour variations, other colours were generated by causing picture elements (PELS) to be of alternating colours to provide a visual half-tone effect.

While Storyboard was, for its time, an acceptable product for the PC, it required considerable education of the user before acceptable level presentations could be produced using it. Additionally, it was somewhat circuitous in its handling of colours other than the primary colours contained within its palette.

Recently, the use of windows, pull downs, cursor selection and other display-oriented, user interface instrumentalities have come into favour. These enable a PC user to directly interface with the PC's software and to control it largely from cursor-controlled screen selections. Substantial capability, colour presentation systems, however, have not, to the inventors' knowledge been made available with user-friendly screen interfaces.

European Patent Application 0 313 796 discloses a colour editor program for allowing a user to select colours for display on a display device. Colours are chosen by selecting the desired hue, intensity and saturation from a display, the current choice being indicated in a colour selection area.

Anti-aliasing in known in the art for enabling curved and slanted lines to be displayed without a stairstep image commonly seen when square-pel images are employed. The stairstep image is filled in with shaded inserts which ramp from the image colour to the background colour. The colours used in this ramp need to selected from among all of the colours available and chosen to achieve the optimal visual effect.

Accordingly, the present invention provides a method for enabling the user of a display system to choose from among a plurality of colours and to visually determine the effect of the choice, the method comprising displaying an interactive user interface which includes image colour choice areas, a current colour selection area and moveable cursor indications; moving a cursor indication to a colour choice area; and displaying the colour choice in the current colour selection area; characterised by displaying anti-alias colour choice areas and an echo icon area; and temporarily altering the display to reflect the effect of the new single colour selection, alone and in combination with the remaining colours previously selected by displaying an echo icon in the echo icon area, the colour of the echo icon area being the colour choice and the echo icon including at least a portion comprising a curved line and selected proposed colour changes being exhibited to varying degrees relative to the curve, whereby an enlarged view of the colour choice and an icon drawn with the colour choice are displayed to enable the user to assess the colour choice.

Such an arrangement is thought to provide a colour palette display interface for a computer-based image editor that provides a user with complete colour selection and edit capability, including basis for the capability to select and alter anti-aliased colour combinations and to immediately perceive on a computer screen, the results of a choice of palette colour.

A display system for producing and showing colour images is described hereinafter by way of example which includes a screen for displaying an interactive user interface. The display interface includes image colour choice areas, anti-alias colour choice areas, a current colour area, an echo icon area and user-movable cursor indications. The invention enables the display system user to choose among a plurality of displayed colours, and to visually determine the effect of the choice. The method includes moving a cursor indication to a colour choice area, displaying the colour choice in the current colour selection area, and displaying in the echo icon area, an echo icon drawn using the colour choice. This enables the display system user to see an enlarged view of the colour choice and an icon drawn with the colour and enables the user to assess the effect of the colour choice, both from the standpoint of the enlarged view and from the standpoint of exhibiting an expanded, anti-aliased figure. In addition, the colour alteration also causes the image to be modified to reflect the colour change, thus enabling the user to obtain a complete assessment of the results of the colour selection.

The present invention will be described further by way of example with reference to an embodiment thereof as illustrated in the accompanying drawings in which
Fig. 1 shows a PC screen with a colour palette display interface;
Fig. 2 illustrates a pull-down menu of various colour helps available;
Fig. 3 is a pull down menu illustrating various "mix colour" subroutines available;
Fig. 4 indicates a modification to the colour palette display interface which occurs when certain "mix colour" subroutines are performed;
Figs. 5a and 5b are high level flow diagrams of a "mix art or image colour" subroutine;
Fig. 6 is a high level flow diagram of a "mix target colour" subroutine;
Fig. 7 is a high level flow "diagram" of a "target against selected colour" subroutine;
Fig. 8 is a high level flow diagram of a "numeric colour code" subroutine; and
Fig. 9 is an indication of the pull-down menu which results when the "numeric colour code" subroutine operates.

Prior to discussing the details of the embodiment of the invention to be disclosed by way of example, it is to be understood that it may be configured as either software or firmware, either of which may be adapted to run on a PC, such as the IBM PS/2. As is well known, most modern PCs are constructed to employ a bus structure with PC/subassembly communications taking place, in the main, over the bus or buses. Characteristically, a graphic-capable PC is provided with an arithmetic/logic unit, random access memory, various disk drives for storing quantities of readily available data, and a colour display which includes a keyboard. The display is adapted to show an image or images, along with a cursor (or cursors) which enable user selection of various software subroutines. The cursor (or cursors) may be controlled from a keyboard or from another input device, such as a Mouse. All of the aforementioned structure is conventional.

In a preferred embodiment, this invention is configured as a portion of a larger computer program for generating audio/visual presentations. The program includes a plurality of major segments, some of which are a library editor; an image editor; an audio editor; and a story editor. The library editor manages the retrieval, processing and storage of audio-visual objects (i .e., pictures, narrations, music). The audio editor is used to record (digitise) sound and to edit it. The image editor, of which this invention is a portion, is primarily used to add text and create graphics and images for the audio-visual presentation. As part of the image editor, each image is provided with a palette which enables the user to select a complete range of colours for any portion of the displayed image, as well as to enable selection and modification of a number of anti-aliased colour combinations. The audio-visual results from the library editor, image editor and audio editor are organised by a story editor segment which then enables the entire story to be run so that a user can view it as a whole.

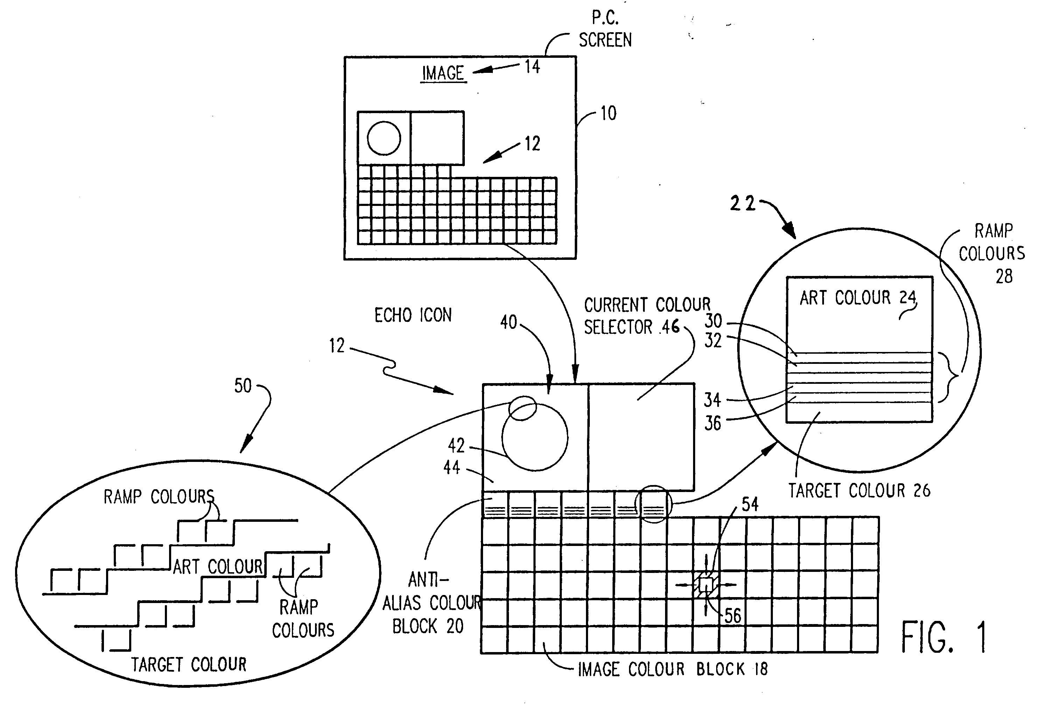

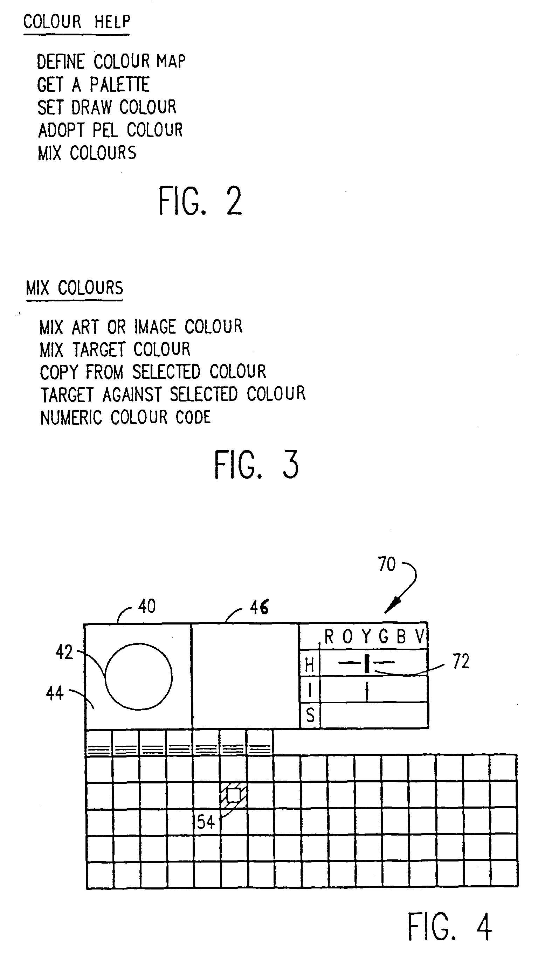

Referring to Fig. 1, the image editor portion of the above program enables an image to be accessed from the Program library and displayed on a PC screen 10. When the user selects a pull-down menu which indicates one or more "Colour Help" routines, such as that shown in Fig. 2, a colour palette display 12 appears in the lower portion of screen 10. It overlays image 14 on the screen and enables the image to be edited for colour. Colour palette 12 defines a number of colour characteristics for the image, such as anti-alias ramps and the total number of available colours. The invention enables a palette's individual colours to be altered, including "custom colours" (colours which typically come from a digitised image) and "art colours" (colours associated with anti-aliased text and drawings). For any selected colour, the user may vary its hue, intensity and/or saturation to achieve the colour blend desired.

Colour palette 12 is shown in expanded form in the bottom- most area of Fig. 1 to enable its various component parts to be better visualised. In the lower portion of the palette are a plurality of image colour blocks 18, each block showing a single colour. Each image colour block 18 may be preset to display a specific colour or, in the alternative, the block may display one of the various colours contained within image 14 on screen 10. As will be hereinafter understood, any colour in an image colour block 18 may be selected for use in image 14; may be replaced with another colour; or, may be altered as to its hue, intensity, or saturation.

Palette 12 further contains a more limited group of blocks 20 devoted to showing colours used with anti-aliased character presentations in image 14. In Fig. 1, there are shown seven anti-aliased colour blocks 20. As shown in expanded area 22, each anti-aliased colour block 20 includes an art colour portion 24, a target colour portion 26 and a plurality of rows of ramp colours 28 which vary between art colour 24 and target colour 26. For instance, ramp colour rows 30 and 32 contain a majority of art colour 24 and a minority of target colour 26; whereas, ramp colour rows 34 and 36 contain a majority of target colour 26 and a minority of art colour 24.

Art colour 24 is generally the colour which is used for the internal portions of alpha-numeric characters and other line type features in image area 14. Target colour 26 is generally the background colour over which the alpha-numeric and/or other image feature is superimposed.

Referring back to colour palette 12, several expanded areas are provided to enable the user to view the results of a colour selection and/or alteration. Echo icon area 40 includes an echo icon 42 which, in Fig. 1 is shown as a circle. It should be understood that other icons, such as an ellipse or other curved image, may be used so long as a portion thereof can illustrate the effects of choices of anti-aliased colours. A portion of icon 42 has been expanded and is shown within balloon 50. Area 44 in echo icon area 40 is a background colour. If an anti-aliased colour block 20 has been selected, background area 44 will assume the target colour displayed within the selected colour block 20, and echo icon 42 will assume the displayed art colour.

As is known, anti-aliasing enables curved and slanted lines to be displayed without the stairstep image common when square-pel images are employed. Anti-aliasing techniques essentially "fill-in" the stairstep areas with shaded inserts which ramp from the inner-most image colour to the background colour, thereby giving the illusion of a smooth line. This is accomplished in icon 42 by causing the innermost portion of the line to assume the art colour, whereas the stairstep portions are filled in with lesser brightness ramp colours, ramping towards the background target colour.

Colour palette 12 is also provided with an enlarged current colour selection area 46 which displays the currently selected image colour block or anti-aliased colour block.

One cursor employed with colour palette 12 is cursor 54 which is "hollow" and enables the colour in either the image colour block 18 or the anti-alias colour block 20 to be viewed through its transparent centre area 56. A highlighted portion about its periphery enables cursor 54 to be easily tracked as it is moved throughout any of colour blocks 18 or 20 by user inputs through a keyboard associated with the PC (not shown). Cursor 54 may be moved to any of anti-alias colour blocks 20 or image colour blocks 18, depending upon the user's actuation of the keyboard cursor control mechanism.

As will be understood from the flow diagrams which further describe this invention, each time cursor 54 is moved to an image colour block 18 or an anti-alias colour block 20, an expanded image of that block appears in current colour selection block 46. If cursor 54 is in place in over an image colour block 18, echo icon 42 and assumes the colour displayed by the colour block and the background area 44 colour is black. If cursor 54 is moved to an anti-alias colour block 20, echo icon 42 assumes the art colour in the anti-aliased colour block and the background colour becomes the target colour illustrated in the block. Echo icon 42 is, furthermore, anti-aliased using the ramp colours contained within the anti-alias colour block 20.

As can be seen, by simply moving cursor 54 about blocks 18 or 20, a selected colour can be viewed in an expanded area and also its effect on curved and slanted images can be seen. Finally, as will be fully understood, through the use of various sub routines, any colour in an image block 18 or an anti-aliased colour block 20 can be altered to any other colour and, anti-aliased in the process, assuming that an anti-alias colour block 20 has been chosen. Furthermore, as any colour is chosen, assuming it is present in image 14 on PC screen 10, that colour changes in accordance with the users alteration of the palette colour.

Turning now to Fig. 2, a plurality of pull-down menus are employed to enable the user to select a particular colour alteration subroutine. The menus shown in Fig. 2 and Fig. 3 are displayed in an upper area of PC screen 10 in the known manner. For instance, if the user is in the image edit portion of the audio visual program, an action bar (not shown) is imposed across the upper portion of PC screen 10 which contains a number of indications, one of which is "colour help." Upon placing a highlighted cursor over "colour help", the pull down menu shown in Fig. 2 appears. Certain of those menu items enable the accessing of a palette, the definition of a colour map, establishment of a draw colour or pel colour, and access to subroutines which enable colours to be mixed or altered. Placing a cursor next to successive menu lines in Fig. 2, enables the following defined functions to be accomplished:

Define colour map -- specifies the number of art and custom colours to assign to the current palette and defines how many ramp "levels of colour" to use for anti-aliasing of art colours. It also specifies whether the image colours are to be "custom" (uniquely set according to image content) or "standard" (a standard set of colours apply to the image).

Get a palette -- this allows a palette to be selected to replace the one currently associated with the image in process.

Set draw colour -- this displays the colour table for the current palette. Cursor movement is used to select a colour to become assigned as the current draw colour. When an art colour is selected and in effect, drawing is done with anti-aliasing. When an image colour is selected, drawing is done without anti-aliasing.

Adopt pel colour -- this causes the current draw colour to be set to whatever colour is under the current position of the cursor. It sets to an art colour when the cursor is on an art colour; and sets to an image colour otherwise.

Mix colours -- this allows the mixing of individual palette colours through adjustment of a colours hue, intensity and saturation level. In addition, the target colour to which an art colour will be ramped is set in this subroutine. Colour changes entered by the user are immediately applied to the current image.

The detailed operation of the invention will be explained with respect to the mix colour line of the colour help menu.

If a cursor is placed so that it highlights the mix colour line in the colour help menu, followed by a depression of an enter key, the mix colour menu shown in Fig. 3 appears in image area 14 of PC screen 10. Assuming that the "mix art or image colour" line is highlighted by the initial highlight cursor when the mix colour menu appears, the colour palette shown in Fig. 1 is altered, as shown in Fig. 4, by the addition of a mix screen 70. Across the top of mix screen 70, is plotted ROYGBV, representing the initials of the major colours of the spectrum (i.e., Red, Orange, Yellow, Green, Blue, Violet). Down the left side of mix screen 70 are three rows, one each for hue, intensity and saturation. A cursor 72 may be moved horizontally along any of the rows or vertically between the rows when a "mix" subroutine is in effect. When mix screen 70 is shown, the position of cursor 54 is fixed at its position in the palette. Under the circumstances shown in Fig. 4, the colour shown at cursor position 54 is illustrated in the current colour selection block 46, with echo icon 42 exhibiting the same colour. The background colour 44 is black.

As cursor 72 is moved by the user along the hue line in mix screen 70, the colour visible through cursor 54, in current colour selection box 46 and in echo icon 42 all change identically to reflect the changed colour components indicated by the position of cursor 72. When cursor 72 is subsequently moved down to the intensity line and moved either right or left, the intensity of the aforementioned colours all change simultaneously. When cursor 72 is moved down to the saturation line, the level of colour saturation in each of the aforementioned areas varies identically. In addition, assuming that the colour viewed through cursor 54 is present in the image on PC screen 10 (Fig. 1), then that colour changes identically with the aforementioned colour indications.

Turning now to Figs. 5a, 5b, 6, 7, and 8, high level flow diagrams are illustrated which describe, in further detail, the logical operations within the PC which enable the above mentioned colour actions to occur.

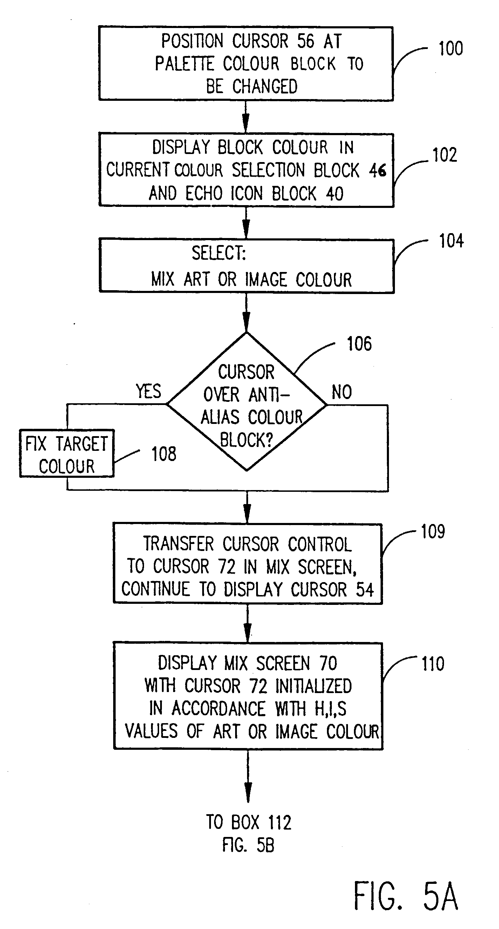

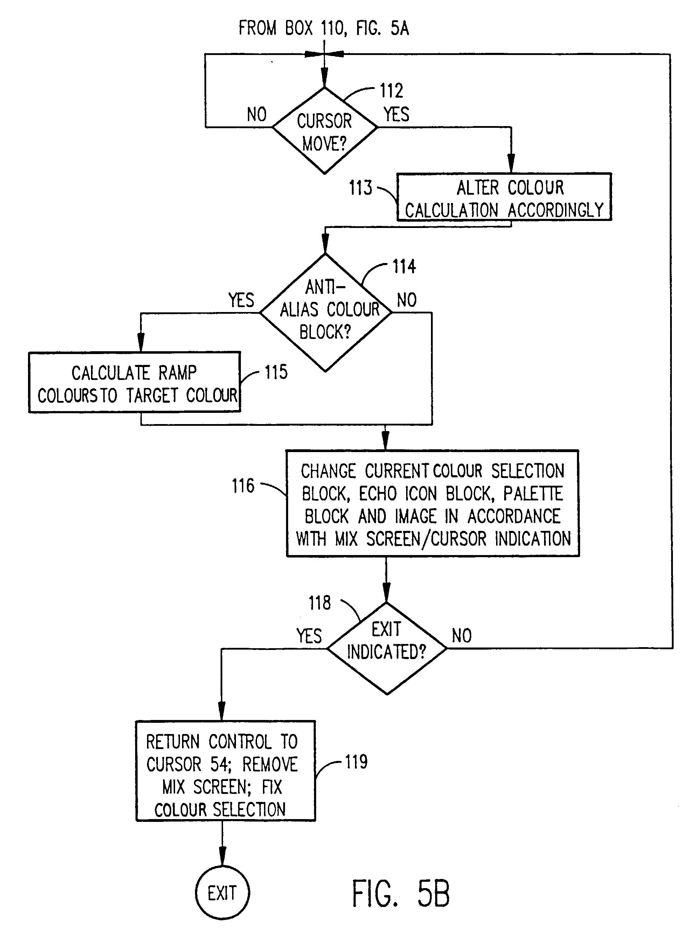

In Figs. 5a and 5b, the routine required to mix either the art or the image colour is illustrated. The process commences by the user positioning cursor 54 over a palette colour block whose colour is to be changed or altered (box 100). In response, the system displays the block's colour in current colour selection block 46 and echo icon block 40. (box 102). Then, the user selects from the menu of Fig. 3 the "mix art or image colour" line (box 104) which enables the colour alteration routine to be enabled.

The system next determines whether cursor 54 is over an anti-alias colour block or not (box 106). If the answer is yes, recall that only the art or image colour is to be altered in this subroutine. Thus, it will be the art colour to be altered, and it is then necessary to fix the target colour so that it cannot be changed (box 108). If the cursor is not over an anti-alias colour block, then, by inference, it is over an image colour block (containing only a single colour).

The system continues to display cursor 54 at its present location, (box 109), and transfers cursor control to a cursor 72 in the mix screen 70 (Fig. 4) - which is now displayed (box 110). Additionally, cursor 72 has its positions on the hue, intensity and saturation lines initialised to represent those values evidenced by the art or image colour being operated upon.

At this stage, the system commences testing the position of cursor 72 to determine if it has moved or not (box 112). If no movement is sensed, the test merely recycles. If movement is sensed, the system determines whether cursor 72 has had its line position changed or has been moved within a line. If it has been moved within the hue line, a recalculation occurs of a new colour hue in accordance with the new cursor position. If, on the other hand, cursor 72 has been moved to a new line, a similar calculation occurs. These details have been omitted from the flow diagram of Fig. 5a to avoid unnecessary complication.

Once the colour calculations are completed, the system proceeds to determine whether cursor 54 is over an anti-alias block (box 114), and if yes, the program calculates ramp colours between the newly calculated art colour and the pre-existing target colour. When the calculations are completed, the program displays the new colour(s) in current colour selection block 46, echo icon block 40, the palette block where cursor 54 is positioned, and in the image (box 116). Thus, the user is able to view, in a number of ways, the effect of the colour alteration created by the change of position of cursor 72 in mix screen 70. For instance, assuming an anti-alias colour block is being altered, that colour block is reproduced in current colour selection block 46 showing the new art colour and a group of ramp colour rows to the pre-existing target colour. In addition, echo icon 42 has its art colour inner portion changed to coincide with the newly chosen art colour and each of the ramp colours is evidenced in the anti-aliased portion of the icon. If the user is dissatisfied with the results of the colour change, cursor 72 may be moved again and the process repeats itself as shown. If the user is satisfied, the program is exited (decision box 118). Control returns to cursor 54, mix screen 70 removed, and the colour selection indicated by cursor 72 is fixed in the indicated image colour block or anti-alias colour block (box 119).

Returning to Fig. 3, if the user selects the "mix target colour" line from the menu, the procedure followed by the system is much the same as for the "mix art or image colour" subroutine. In this instance, however (see Fig. 5a) in lieu of the target colour being fixed (box 106), the art colour is fixed and the target colour subsequently altered. Accordingly, the flow diagram for this subroutine is similar to that shown in Figs. 5a and 5b except that it is the target colour which is altered through the operation of cursor 72 within mix screen 70. In summary, both the "mix art or image colour" and "mix target colour" lines from the menu of Fig. 3 accomplish the alteration of the hue, intensity or saturation of the respective colour being displayed and indicate the effect of the colour change to the user.

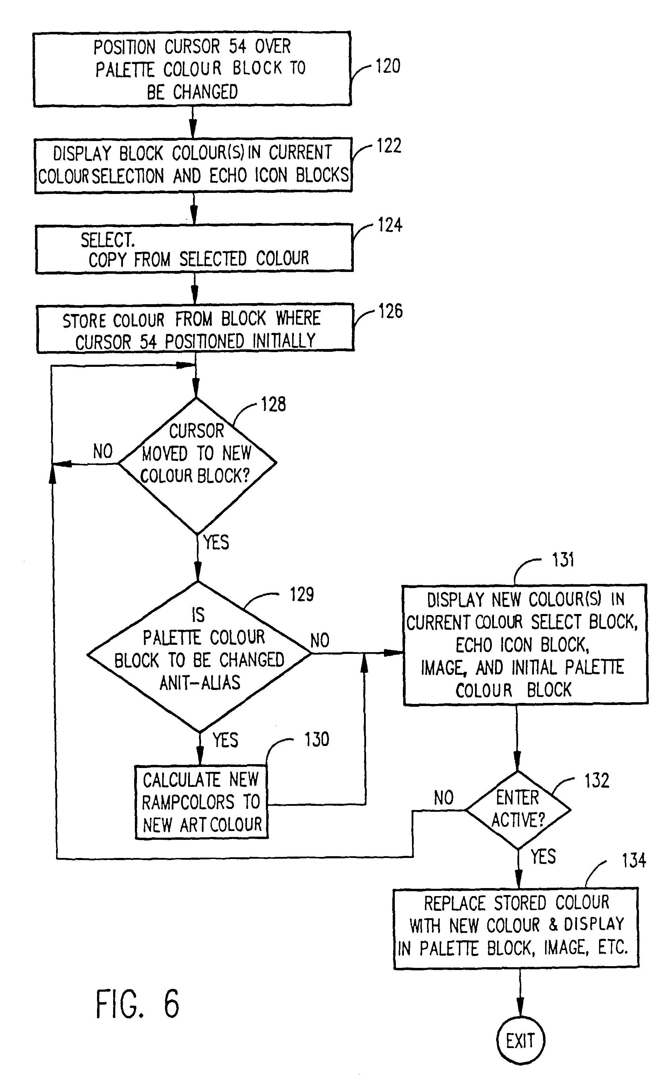

Turning now to Fig. 6, the "copy from selected colour" subroutine will be as described. The program commences much the same as in the previous routines, in that cursor 54 is positioned over a selected colour block and the selected colour is displayed in current colour selection block 46 and echo icon block 40 (boxes 120, 122). The user then moves a highlight cursor over the "copy from selected colour" line in the menu of Fig. 3, and enables commencement of the subroutine. Initially, the system stores the colour from the colour block where cursor 54 is positioned (box 126). If cursor 54 is positioned over an anti-alias block, it is the art colour which is stored. Then a test is performed (box 128) to determine whether the user has moved cursor 54 to a new colour block. If not, the routine recycles. If it is determined that cursor 54 has been moved to a new colour block, the new colour block is displayed in current colour selection block 46, echo icon block 40, in the palette colour block where cursor 54 was initially positioned and in the image shown on PC screen 10 (box 131). Additionally, if it is determined (box 129) that the palette colour block being changed is an anti-alias colour block, new ramp colours are calculated to the new art colour (box 130) and the results displayed as indicated in box 131. It is to be noted that in this subroutine, cursor 54 is not fixed and is employed by the user to move around the palette to enable the new colour selection to occur. Furthermore, as cursor 54 is moved around the palette, each new colour is displayed in the image at the precise location where the colour which was stored (box 126) is shown in the image.

Once the user has arrived at an acceptable colour, an enter key on the PC is depressed (box 132) indicating that the new colour (or colours, if the block is an anti-alias block) is to be stored in the initial palette colour block, displayed in the image, etc. (box 134). If, on the other hand, the cursor is again moved, the program recycles.

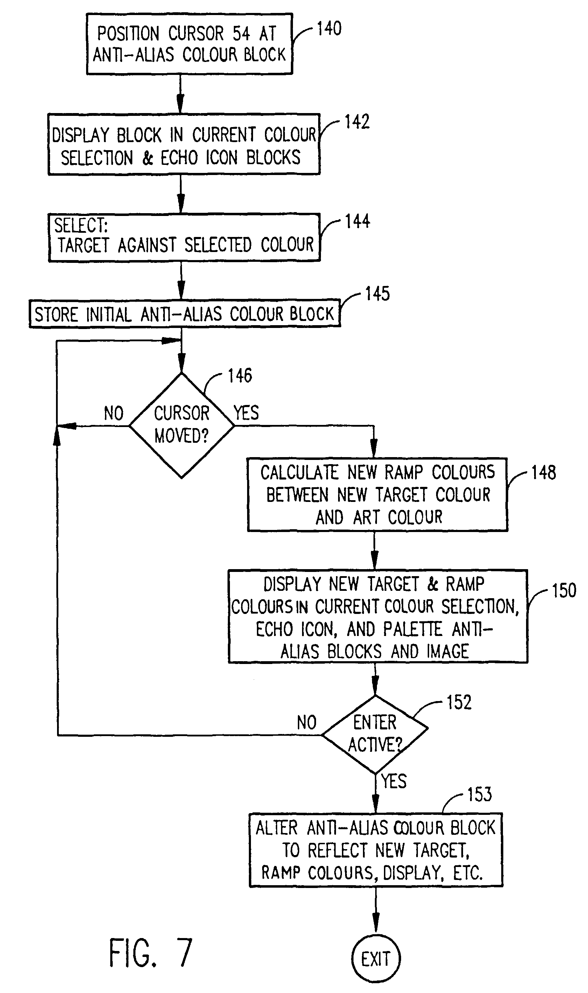

Referring now to Fig. 7, a subroutine is illustrated for changing a target colour in an anti-alias palette block to another displayed palette colour. Initially, the user positions cursor 54 at an anti-alias colour block (box 140). The system responds by displaying, in the aforedescribed manner, a replica of the anti-alias colour block in current colour selection block 46 and echo icon block 40 (box 142). The user then places a highlight cursor over the "target against selected colour" (box 144) which enables implementation of a target colour alteration subroutine. If cursor 54 is not positioned over an anti-alias colour block, a note is displayed to the user indicating such.

The subroutine tests whether cursor 54 has been moved to a new colour block. Recall, that the objective of this subroutine is to change a target colour from its present colour to another displayed palette colour. Thus cursor 54 is enabled to wander around the palette, with its successive positions being displayed as aforestated. The position of cursor 54 is continuously tested to determine if it has moved (box 146) and, if no movement is sensed, the testing continues. On the other hand, if it has moved to a new palette block, new ramp colours are calculated to the pre-existing art colour (box 148). Then, current colour selection block 46, echo icon block 40, the initial anti-alias colour block and image are all simultaneously altered to show the new target and ramp colours to the pre-existing art colour (box 150). If the enter key is activated (box 152) the new target and ramp colours replace the target and ramp colours in the stored initial anti-alias colour block and the program exits (box 153). If enter is not activated, the program recycles back to box 146, until the user makes a colour choice.

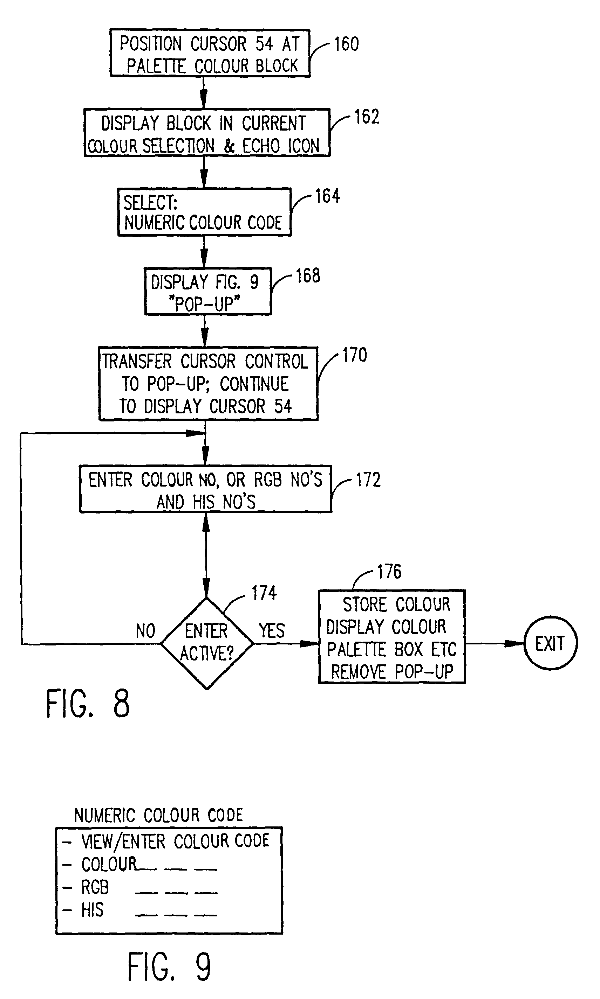

If, now the user selects "numeric colour code" from the menu of Fig. 3, the subroutine shown in Fig. 8 occurs as does the "pop-up" shown in Fig. 9. Initially, the user positions cursor 54 at a palette colour block (box 160). As aforestated, this causes the colour in the block to be displayed in the current colour selection block 46 and echo icon block 40 (box 162). If the user then selects "numeric colour code" (box 164), the Fig. 9 pop-up (box 168) is displayed above the colour palette, superimposed over the image on PC screen 10. The pop-up enables the user to enter either a colour number; individual red, green, and/or blue numbers; and/or individual hue, intensity, and saturation numbers. As the numbers are entered, the display shows the colour which corresponds to the entered numbers, in the echo icon and current colour selection blocks 40 and 46 and the palette colour block where cursor 54 is positioned. In addition, the image is similarly modified.

Returning to Fig. 8, once the pop-up of Fig. 9 occurs, the cursor control is transferred to a pop-up cursor highlight and cursor 54 continues to be displayed, but cannot be moved until the user exits from the subroutine. Then, the user either enters a pre-existing colour number; or individual red, green, and blue numbers and/or hue, intensity and saturation numbers. When all numbers are entered on the screen, the "enter" key is depressed, and the display then indicates the corresponding colour in the aforestated positions (boxes 172, 174 and 176). In specific, the user has found that the selected colour is acceptable and has depressed the enter key which has caused the selected colour to be stored; displayed in the palette box and elsewhere as aforestated. The Fig. 9 pop-up is removed. At this point the program exits. If, however, before depressing "enter", the user decides that the colour is not appropriate, new numbers may be entered and the program recycles as shown.

## Claims

1. A method for enabling the user of a display system to choose from among a plurality of colours and to visually determine the effect of the choice, the method comprising:
displaying an interactive user interface which includes image colour choice areas (18,20), a current colour selection area (46) and moveable cursor indications (54);
moving a cursor indication (54) to a colour choice area (18,20); and
displaying the colour choice in the current colour selection area (46);
characterised by:
displaying anti-alias colour choice areas (20) and an echo icon area (40); and
temporarily altering the display to reflect the effect of the new single colour selection, alone and in combination with the remaining colours previously selected by displaying an echo icon in the echo icon area (40), the colour of the echo icon area (40) being the colour choice and the echo icon including at least a portion comprising a curved line (50) and selected proposed colour changes being exhibited to varying degrees relative to the curve, whereby an enlarged view of the colour choice and an icon drawn with the colour choice are displayed to enable the user to assess the colour choice.

2. A method as claimed in claim 1, wherein each anti-alias colour choice area includes an art colour which ramps to a target colour, the target colour being employed as a background for the echo icon when the cursor is positioned at an anti-alias colour choice area.

3. A method as claimed in claim 2, wherein each anti alias colour choice area includes a plurality of ramp colour bar areas, each bar area being a mixture of the art colour and the target colour, the ramp colour bar area closest to the art colour including a major amount of the art colour and the ramp colour bar closest to the target colour including a major amount of the target colour.

4. A method as claimed in Claim 3, wherein the interior portions of the curved anti-alias line are coloured with the art colour and increasingly peripheral areas of the curved line with colours exhibited by the ramp colour bar areas.

5. A method as claimed in any preceding claim wherein the colour choice area is initially indicated by a created cursor provided with an outline which surrounds the colour choice area and a transparent interior, thus enabling the colour to be viewed in the cursor's interior.

6. A method as claimed in any preceding claim, wherein the interface driver provides a mix colour command choice and, in response to selection thereof, a mix screen and a second cursor are displayed, the mix screen indicating hue, intensity and saturation variables, and, responding to user movements of the second cursor among the mix screen variables, accordingly alter the colour in the initial colour choice area.

7. A method as claimed in claim 6, wherein the anti-alias colour choice area includes an indicated art colour, target colour and a plurality of interposed colour bars indicating various mixtures of the target and art colours, the mix colour command acting to alter/replace the art/target colour, the display changing the art/target colour in the anti-alias colour choice area to the another colour choice, but not the target/art colour and revising the interposed colour bars by substituting the changed art/target colour therein in place of the initial art/target colour.

8. A method as claimed in any preceding claim, wherein, if the cursor is moved from the initial colour choice area to another colour choice area, the second colour is displayed in the initial colour choice area and, if selected, becomes fixed in the initial colour choice area.

9. A method as claimed in claim 6, wherein, in response to a a mix colour command, a numeric colour code entry chart is invoked and displayed, together with a second cursor, the chart indicating entries for colour numbers, and hue intensity and saturation variables and, responsive to user movements of the second cursor and entries to the chart to accordingly alter the colour in the initial colour choice area.

10. A method as claimed in any preceding claim, wherein the interactive user interface display is superposed over the displayed image being operated on, and every point in the displayed image which reflects the first colour is temporarily changed to the second colour in response to the tentative colour selection.

## Patentansprüche

1. Ein Verfahren, das es dem Benutzer eines Anzeigesystems ermöglicht, unter mehreren Farben zu wählen und die Wirkung seiner Wahl optisch festzustellen, wobei das Verfahren besteht aus:
dem Anzeigen einer interaktiven Benutzeroberfläche mit Bildfarbauswahlbereichen (18, 20), einem Bereich für die aktuelle Farbauswahl (46) und beweglichen Cursordarstellungen (54),
dem Bewegen einer Cursordarstellung (54) zu einem Farbauswahlbereich (18, 20) und
dem Anzeigen der Farbauswahl in dem Bereich für die aktuelle Farbauswahl (46),
gekennzeichnet durch:
das Anzeigen von Antialias-Farbauswahlbereichen (20) und eines Echosymbolbereichs (40) und
das vorübergehende Verändern der Anzeige, um die Wirkung der neuen Einzelfarbauswahl allein und in Kombination mit den restlichen, davor gewählten Farben wiederzugeben, indem im Echosymbolbereich (40) ein Echosymbol angezeigt wird, wobei die Farbe des Echosymbolbereichs (40) die Farbauswahl ist und das Echosymbol mindestens einen Teil mit einer gekrümmten Linie (50) umfaßt und ausgewählte vorgeschlagene Farbveränderungen in unterschiedlich starkem Ausmaß relativ zu der Krümmung dargestellt werden, wodurch eine vergrößerte Ansicht der Farbauswahl und ein mit der Farbauswahl gezeichnetes Symbol angezeigt werden, so daß der Benutzer die Farbauswahl beurteilen kann

2. Ein Verfahren nach Anspruch 1, bei dem jeder Antialias-Farbauswahlbereich eine Kunstfarbe enthält, die in eine Zielfarbe übergeht, und die Zielfarbe als Hintergrund für das Echosymbol verwendet wird, wenn der Cursor sich in einem Antialias-Farbauswahlbereich befindet.

3. Ein Verfahren nach Anspruch 2, bei dem jeder Antialias-Farbauswahlbereich mehrere Übergangsfarbstreifenbereiche enthält, wobei jeder Streifenbereich eine Mischung aus Kunstfarbe und Zielfarbe darstellt, der Übergangsfarbstreifenbereich, der am nächsten bei der Kunstfarbe liegt, mehr von der Kunstfarbe enthält und der Übergangsfarbstreifenbereich, der am weitesten von der Kunstfarbe entfernt liegt, mehr von der Zielfarbe enthält.

4. Ein Verfahren nach Anspruch 3, bei dem die inneren Teile der gekrümmten Antialiaslinie die Kunstfarbe aufweisen und die weiter außen liegenden Bereiche der gekrümmten Linie in den Farben gehalten sind, die von den Übergangsfarbstreifenbereichen angezeigt werden.

5. Ein Verfahren nach einem der vorstehenden Ansprüche, bei dem der Farbauswahlbereich zunächst durch einen erstellten Cursor angezeigt wird, der mit einem Umriß, der den Farbauswahlbereich umgibt, und einem transparenten Innenbereich versehen ist, so daß die Farbe im Inneren des Cursors sichtbar ist.

6. Ein Verfahren nach einem der vorstehenden Ansprüche, bei dem der Schnittstellentreiber einen Befehl zum Farbenmischen anbietet, bei dessen Auswahl ein Mischbildschirm und ein zweiter Cursor erscheinen, wobei der Mischbildschirm Variablen für Farbton, Intensität und sättigung angibt und sich die Farbe im ersten Farbauswahlbereich ändert, wenn der Benutzer den zweiten Cursor zwischen den Variablen des Mischbildschirms umherbewegt.

7. Ein Verfahren nach Anspruch 6, bei dem der Antialias-Farbauswahlbereich einen Kunstfarbstreifen, einen Zielfarbstreifen und dazwischen mehrere Farbstreifen umfaßt, die die verschiedenen Mischungen der Zielfarbe und der Kunstfarbe anzeigen, wobei der Befehl zum Farbenmischen dazu dient, die Kunstfarbe/Zielfarbe zu ändern/ersetzen, und die Anzeige die Kunstfarbe/Zielfarbe im Antialias-Farbauswahlbereich in eine andere Farbauswahl ändert, jedoch nicht die Kunstfarbe/Zielfarbe, und die dazwischen befindlichen Farbstreifen revidiert, indem sie darin die erste Kunstfarbe/Zielfarbe durch die geänderte Kunstfarbe/Zielfarbe ersetzt.

8. Ein Verfahren nach einem der vorstehenden Ansprüche, bei dem im Falle der Bewegung des Cursors von dem ersten Farbauswahlbereich zu einem anderen Farbauswahlbereich die zweite Farbe im ersten Farbauswahlbereich angezeigt wird und, wenn sie ausgewählt wird, in dem ersten Farbauswahlbereich festgehalten wird.

9. Ein Verfahren nach Anspruch 6, bei dem als Reaktion auf einen Befehl zum Farbenmischen ein Diagramm mit numerischen Zahlencodeeinträgen gemeinsam mit einem zweiten Cursor aufgerufen und angezeigt wird, das Einträge für Farbnummern sowie Variablen für Farbton, Intensität und Sättigung angibt und darauf reagiert, daß der Benutzer den zweiten Cursor bewegt und Einträge in das Diagramm eingibt, um die Farbe im ersten Farbauswahlbereich entsprechend zu ändern.

10. Ein Verfahren nach einem der vorstehenden Ansprüche, bei dem die Anzeige der interaktiven Benutzeroberfläche über das angezeigte Bild gelegt wird, das gerade bearbeitet wird, und jeder Punkt des angezeigten Bildes, der die erste Farbe widerspiegelt, als Reaktion auf eine versuchsweise vorgenommene Farbauswahl vorübergehend in die zweite Farbe umgeändert wird.

## Revendications

1. Un procédé pour permettre à l'utilisateur d'un système d'affichage de choisir parmi une pluralité de couleurs et de déterminer visuellement l'effet du choix, le procédé comprenant :
l'affichage d'une interface utilisateur interactive, comprenant des aires de choix de couleurs d'image (18, 20), une aire de sélection de couleurs actuelle (46) et des indications par curseur (54) déplaçable;
le déplacement d'une indication par curseur (54) sur une aire de choix de couleurs (18, 20); et
l'affichage du choix de couleur dans l'aire de sélection de couleurs actuelle (46);
caractérisé par :
l'affichage d'aires de choix de couleurs lissées (20) et d'une aire d'icône d'écho (40); et
la modification temporaire de l'affichage pour refléter l'effet de la nouvelle sélection de couleur unique, seule et en combinaison avec les couleurs restantes ayant été antérieurement sélectionnées, par affichage d'une icône d'écho dans l'aire d'icône d'écho (40), la couleur de l'aire d'icône d'écho (40) étant celle du choix de couleur et l'icône d'écho comprenant au moins une partie comprenant une ligne courbe (50) et les modifications de couleur proposées sélectionnées étant présentées par des modifications de degrés vis à vis de la courbe, de manière à afficher une vue agrandie du choix de couleur et qu'une icône, tracée avec le choix de couleur, afin de permettre à l'utilisateur d'évaluer le choix de couleur.

2. Un procédé selon la revendication 1, dans lequel chaque aire de choix de couleur lissée comprend une couleur de signe évoluant vers une couleur cible, la couleur cible étant utilisée comme arrière-plan pour l'icône d'écho lorsque le curseur est positionné sur une aire de choix de couleur lissée.

3. Un procédé selon la revendication 2, dans lequel chaque aire de choix de couleur lissée comprend une pluralité d'aires à barres de couleur progressives, chaque aire de barre étant un mélange de la couleur de signe et de la couleur cible, l'aire de barre de couleur progressive se trouvant la plus près de la couleur de signe comprenant une partie principale de la couleur de signe et la barre de couleur progressive se trouvnt la plus près de la couleur cible comprenant une quantité principale de couleur cible.

4. Un procédé selon la revendication 3, dans lequel les parties intérieures des lignes lissées incurvées sont colorées avec la couleur de signe et les aires, situées de plus en plus en périphérie, de la ligne incurvée, sont colorées avec des couleurs présentées par les aires à barres de couleur progressive.

5. Un procédé selon l'une quelconque des revendications précédentes, dans lequel l'aire de choix de couleur est initialement désignée par un curseur créé, pourvu d'un profil entourant l'aire de choix de couleur et dont l'intérieur est transparent, permettant ainsi à la couleur d'être observée à l'intérieur du curseur.

6. Un procédé selon l'une quelconque des revendications précédentes, dans lequel le gestionnaire d'interface propose un choix d'instruction de couleurs mélangées et, en réponse à la sélection dans ce choix, un écran mélangé et un deuxième curseur sont affichés, l'écran mélangé indiquant les variables de teinte, d'intensité et de saturation, et, en réponse au déplacement par l'utilisateur du deuxième curseur dans les variables d'écran mélangées, produisant une modification correspondante de la couleur dans l'aire de choix de couleur initiale.

7. Un procédé selon la revendication 6, dans lequel l'aire de choix de couleur lissée comprend une couleur de signe indiquée, une couleur cible et une pluralité de barres de couleurs interposées indicatives de différents mélanges des couleurs cibles et de signe, l'instruction de couleurs mélangées agissant pour modifier/remplacer la couleur de signe/cible, une modification d'affichage de la couleur de signe/cible se produisant dans l'aire de choix de couleur lissée pour adopter un autre choix de couleur, mais pas la couleur cible/de signe, et en réaffichant les barres de couleurs interposées avec substitution par la couleur de signe/cible ayant été modifiée de manière à prendre la place de la couleur de signe/cible initiale.

8. Un procédé selon l'une quelconque des revendications précédentes, dans lequel, si le curseur est déplacé de l'aire de choix initiale à une autre aire de choix de couleur, la deuxième couleur est affichée dans l'aire de choix de couleur initiale et, si elle est sélectionnée, devient fixe dans l'aire de choix de couleur initiale.

9. Un procédé selon la revendication 6, dans lequel, en réponse à une instruction de couleur mélangée, un graphique numérique d'entrée de code de couleur est appelé et affiché, conjointement avec un deuxième curseur, le graphique indiquant des entrées pour les numéros de couleur et des variables de teinte d'intensité de saturation, et, en réponse au déplacement par l'utilisateur du deuxième curseur et aux entrées au graphique, une modification correspondante de la couleur étant produite dans l'aire de choix de couleur initiale.

10. Un procédé selon l'une quelconque des revendications précédentes, dans lequel l'affichage à interface utilisateur interactive est superposé à l'image affichée en cours de traitement et chaque point dans l'image affichée reflétant la première couleur est modifiée temporairement pour prendre la deuxième couleur, en réponse à la tentative de sélection de couleurs.
